**Europäisches Patentamt**

(19) **European Patent Office**

**Office européen des brevets**

(11) Veröffentlichungsnummer: **0 053 102**
**B1**

(12) ## EUROPÄISCHE PATENTSCHRIFT

(45) Veröffentlichungstag der Patentschrift:
**13.02.85**

(21) Anmeldenummer: **81810463.0**

(22) Anmeldetag: **19.11.81**

(51) Int. Cl.⁴: **G 01 B 5/02**, G 01 B 5/24,
G 01 B 7/02, G 01 B 7/30

(54) **Längenmessvorrichtung.**

(30) Priorität: **20.11.80 CH 8822/80**

(43) Veröffentlichungstag der Anmeldung:
**02.06.82 Patentblatt 82/22**

(45) Bekanntmachung des Hinweises auf die Patenterteilung:
**13.02.85 Patentblatt 85/7**

(84) Benannte Vertragsstaaten:
**AT BE CH DE FR GB IT LI LU NL SE**

(56) Entgegenhaltungen:
**US - A - 2 142 401**

(73) Patentinhaber: **Albert Gnehm, Werkzeug- und Apparatefabrik, Oberdorfstrasse 9/11, CH-8810 Horgen (CH)**

(72) Erfinder: **Hodel, Horst, Im Zagg, CH-9476 Fontnas-Weite (CH)**

(74) Vertreter: **Schmid, Rudolf et al, c/o ISLER & SCHMID Patentanwaltsbureau Walchestrasse 23, CH-8006 Zürich (CH)**

BUNDESDRUCKEREI BERLIN

## Beschreibung

Die Erfindung betrifft eine Vorrichtung nach dem Oberbegriff des unabhängigen Patentanspruchs 1.

Durch die US-A-2 142 401 ist eine Vorrichtung zur Messung des Abstandes zwischen zwei parallelen Geraden bekannt geworden, die eine Schablone mit einer äußeren kreisförmigen Kurvenlinie und einer inneren geeichten Kurvenlinie besitzt. Die Schablone wird so gelegt, daß die beiden Geraden Tangenten an die Kurvenlinien bilden, worauf der Abstand auf der inneren Kurvenlinie abgelesen werden kann. Zur Messung der Länge einer Strecke müssen zuerst zwei parallele Geraden durch die Endpunkte senkrecht zur Verbindungsgeraden konstruiert werden. Zum Ausmessen mehrerer Punkte muß die Schablone verschoben werden.

Die einfachste und billigste Methode, an Profilprojektoren, Werkstattmikroskopen, Anlagen mit Bildschirm und optischen Härteprüfern Längen auszumessen, ist die Verwendung eines lose geführten, meist mit einer Arretierung versehenen Maßstabes. Diese Meßmethode ist unhandlich, und der über den Bildrand vorstehende Maßstab ist Beschädigungen ausgesetzt. Bei Profilprojektoren hat diese Methode ferner den Nachteil, daß zur Vermeidung von Parallaxe der Maßstab direkt auf der meist kratz- und fettempfindlichen Bildfläche geführt werden muß.

Zweckdienlichere Vorrichtungen verwenden mechanisch geführte Maßstäbe oder Parallelstrichschablonen, welche direkt oder mittels Spindeln oder Zahnstangen verschoben werden. Zur Erhöhung der Meßgenauigkeit werden Nonius oder übersetzte Skalen eingesetzt. Schließlich kann zur digitalen Längenmessung am Treibrad von Spindel oder Zahnstange ein digitaler Winkelmesser angeschlossen werden. Alle diese Vorrichtungen sind teuer in der Herstellung, weisen immer noch vorstehende, empfindliche Teile auf und verlangen einen Drehmechanismus für die gesamte Vorrichtung, wenn das Meßobjekt nicht gedreht werden kann.

Die Erfindung bezweckt, eine Vorrichtung der gattungsgemäßen Art zu schaffen, bei welcher die genannten Nachteile vermieden werden. Die erfindungsgemäße Vorrichtung ist dadurch gekennzeichnet, daß die Kurvenlinie bei entsprechender Drehung der Schablone um einen festen Drehpunkt mit den Endpunkten der Strecke in Deckung bringbar ist, wobei der Drehwinkel zwischen den beiden Deckungspositionen ein Maß für die Länge der Strecke ist.

Nachfolgend werden anhand der Zeichnungen Ausführungsbeispiele der Erfindung näher erläutert. Es zeigt

Fig. 1 eine Draufsicht auf eine Kurvenlinienschablone für die Längenmessung,

Fig. 2 schematisch die Härteprüfung nach Vickers,

Fig. 3 eine Draufsicht auf eine weitere Ausführungsform einer Kurvenlinienschablone zur Verwendung bei der Härteprüfung nach Vickers,

Fig. 4 schematisch ein digitales Längenmeßgerät und

Fig. 5 einen Querschnitt durch die Schablonenvorrichtung des Gerätes gemäß Fig. 4.

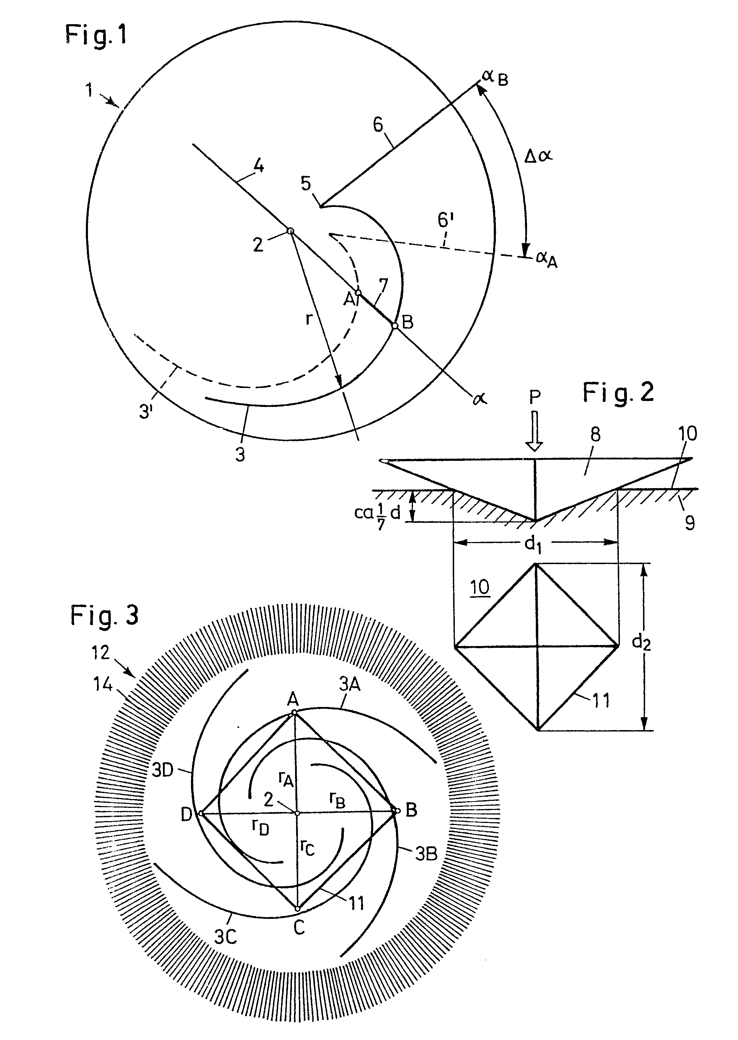

Gemäß der Fig. 1 ist auf der Oberfläche der durchsichtigen Schablone 1 ein Drehzentrum 2 markiert und eine Kurvenlinie 3 aufgezeichnet. Die Form der Kurvenlinie 3 ist so berechnet oder empirisch bestimmt, daß in dem für die Messung maßgebenden Bereich jedem vom Drehzentrum 2 ausgehenden radialen Abstand r ein bestimmter Winkel $\alpha$ linear zugeordnet ist. Ein durch das Drehzentrum gehender Strahl, in Fig. 1 zum Beispiel, ausgeführt als radialer Abschnitt 6 vom inneren Ende 5 der Kurvenlinie 3, zeigt den Drehwinkel $\alpha$ z. B. an einer Skala an. Zur Messung der Länge der Strecke 7, die auf der Trägergeraden 4 liegt, wird nun wie folgt vorgegangen.

Die Schablone 1 wird ausgerichtet, indem durch Verschiebung das Drehzentrum 2 mit der Trägergeraden 4 der Strecke 7 zur Deckung gebracht wird. Dabei ist zu beachten, daß das Drehzentrum 2 außerhalb der Strecke 7 liegt. Da die radialen Abstände r der Kurvenlinie 3 in einem linearen Verhältnis zu den entsprechenden Winkeln $\alpha$ stehen, und da die Längenmessung eine Differenzmessung ist, spielt die weitere Lage des Zentrums 2 keine Rolle. Nun wird durch Rotation um das Drehzentrum 2 die Kurvenlinie 3 mit dem einen Endpunkt A der zu messenden Strecke zur Deckung gebracht (Referenzmessung), wobei diese Lage der Kurvenlinie 3 in der Fig. 1 gestrichelt eingezeichnet und mit 3' angegeben ist. Durch den Abschnitt 6' wird der Winkel $\alpha_A$ angezeigt. Anschließend wird der zweite Endpunkt B mit der Kurvenlinie 3 zur Deckung gebracht, wobei der Abschnitt 6 nun den Winkel $\alpha_B$ anzeigt. Die bei der Verdrehung benötigte Drehwinkeländerung $\Delta\alpha = \alpha_B - \alpha_A$ ist ein Maß für die Streckenlänge, die nun z. B. einer Tabelle entnommen werden kann. Es wäre auch möglich, die Schablone mit einer konzentrisch angebrachten Skala zu versehen, welche entsprechend geeicht ist, damit der Drehwinkel direkt als Längendifferenz abgelesen werden kann. Eine solche Skala könnte auch als drehbarer Ring ausgebildet sein, damit die Schablone bei der Referenzmessung auf Null indexiert werden kann, und damit die Länge der gemessenen Strecke dann direkt abgelesen werden kann.

Die beschriebene Schablone hat gegenüber der Anwendung eines Maßstabes den Vorteil, daß sie bei gleicher Meßauflösung kompakter ist und keine losen oder vorstehenden Teile aufweist. Ein besonderer Vorteil der Schablone besteht ferner darin, daß eine Länge direkt mittels eines Winkelgebers oder eines Inkremental-Winkelmessers digital gemessen werden könnte, so daß z. B. die üblicherweise benötigte teure Spindel oder Zahnstange entfallen würde.

Weitere Möglichkeiten bestehen darin, die Kurvenlinienschablone mit einem zentralen Schaft oder einem Zahnkranz zu versehen und damit einen Winkelgeber oder Inkremental-Winkelmesser zu treiben.

Eine wesentliche Vereinfachung ergibt sich, wenn der für die digitale Winkelmessung notwendige Code oder Strichraster direkt auf der Schablone angebracht wird, so daß diese gleichzeitig als Bestandteil der Winkelmeßvorrichtung benützt wird.

Zweckmäßigerweise kann bei Profilprojektoren die Schablone als Projektionsebene ausgebildet werden, wobei vorzugsweise die Kurvenlinie auf derjenigen Seite angebracht wird, die als Projektionsebene dient. Außer einer weiteren Vereinfachung hat diese Vorrichtung den Vorteil, daß sie ein parallaxfreies Ablesen erlaubt. Dies ist, im Gegensatz zur Verwendung einer losen Schablone oder eines Maßstabes, auch der Fall, wenn die Projektionsebene wegen Beschädigungsgefahr auf der unzugänglichen Seite der Schablone angebracht ist.

Bei großer Meßauflösung der Schablone, d. h. wenn die Kurvenlinie einen möglichst großen Sektor überstreichen soll, ist die vorstehend beschriebene Kurvenlinie 3 mit linearem Zusammenhang zwischen Meßstrecke und Winkel wenig geeignet, weil der Schnittwinkel zwischen Kurve und Trägergeraden der zu messenden Strecke stark variiert über den Meßbereich und allenfalls im Randbereich zu klein wird.

Der Wahl der Kurvenlinien sind jedoch keine Grenzen gesetzt, solange die Zuordnung zwischen Meßstrecke und Winkel eindeutig ist oder gemacht werden kann. Es können daher z. B. Kurven mit konstanter Steigung, Kurven mit einfachen mathematischen Funktionen oder solche, welche der Ausbildung des Meßobjektes angepaßt sind, angewendet werden.

Nichtlineare Zuordnungen haben allerdings zur Folge, daß die Referenzmessung nicht mehr direkt an einem beliebig liegenden Endpunkt der zu messenden Strecke gemacht werden kann, sondern daß beide Endpunkte von einer festen Referenz aus vermessen werden müssen. Ferner wird eine nichtlineare Ableseskala benötigt, oder, im Fall einer digitalen Winkelmessung, eine Linearisierung. Diese kann durch Rechnung geschehen oder indem Codemaßstab oder Strichraster des Winkelmessers entsprechend nichtlinear ausgebildet werden.

Vorrichtungen nach der Erfindung vereinfachen beim Ausmessen von Werkstücken, bei denen mehrere Längenmessungen von einem bestimmten Bezugspunkt aus vorgenommen werden müssen, die Handhabung wesentlich. Die Referenzmessung muß nämlich nur einmal, an einem bestimmten Referenzpunkt am Meßobjekt, gemacht werden. Ist es möglich, diesen Referenzpunkt bezüglich der Meßvorrichtung festzuhalten, so wird die Referenzmessung sogar hinfällig. Für Serienmessungen kann der Meßaufwand weiter verringert werden, wenn jedem Meßpunkt eine eigene Kurvenlinie zugeordnet wird.

In Anwendungen, bei welchen sowohl Strecken als auch Winkel gemessen werden, ergeben sich wesentliche Einsparungen, indem beide Größen mit ein und derselben Meßvorrichtung erfaßt werden können. Auf der Kreisskala sind dann lediglich neben den geeichten Längendifferenzen auch Winkel aufzutragen.

Eine Längenmessung, verbunden mit einer Winkelmessung, ist z. B. notwendig bei der Längenmessung einer Strecke, deren Trägergerade nicht durch das Drehzentrum der Meßvorrichtung geht. Aus den Radien beider Endpunkte zu einem beliebig liegenden Drehzentrum und dem Drehwinkel zwischen den Endpunkten läßt sich in diesem Fall die Streckenlänge bestimmen. Bei einer solchen Anwendung benützt an zweckmäßigerweise zwei konzentrische Scheiben, wobei die eine davon mit einem Strahl durch das Drehzentrum versehen ist und zur Winkelmessung verwendet wird, während auf der anderen eine oder mehrere Kurvenlinien zur Messung der Radien angebracht sind. Im Meßbereich der Kurvenlinienschablone kann so über jeden Punkt in der Ebene ein Schnittpunkt zwischen Winkelmeß-Strahl und Kurvenlinie gelegt und damit der Punkt in Polarkoordinaten ausgemessen werden, sofern ein Bezugsstrahl vereinbart ist.

Der Vorteil einer solchen Anordnung besteht darin, daß zur Bestimmung der Polarkoordinaten eines Punktes auch die Radienmessung mittels einer Winkelmeßvorrichtung durchgeführt werden kann, welche für die Winkelmessung sowieso notwendig ist. Die Bestimmung von Streckenlängen aus ihren Endpunkten oder, falls notwendig, die Umrechnung in Kartesische Koordinaten kann z. B. über eine digitale Winkelmeßvorrichtung in einem Digitalrechner vorgenommen werden.

In der Fig. 3 ist eine Längenmeßvorrichtung gezeigt, welche bei der Härteprüfung nach Vickers gemäß Fig. 2 verwendet wird. Bekanntlich wird bei der Härtemessung nach Vickers ein genau definierter Eindringkörper 8 mit einer vorgegebenen Prüfungskraft P gegen einen Probekörper 9 gepreßt. Der als Diamant-pyramide ausgebildete Eindringkörper 8 hinterläßt in der Oberfläche 10 des Probekörpers 9 einen quadratischen Eindruck 11, dessen Diagonalen $d_1$, $d_2$ ausgemessen und gemittelt werden, wobei dieser Mittelwert ein Maß für den aus einer Tabelle zu entnehmenden Härtewert ist.

Bei bekannten Härteprüfgeräten wird die Eindruckfläche 11 auf eine Mattscheibe projiziert, wo sie ausgemessen werden kann. Bei modernen Geräten erfolgt die Härteprüfung möglichst automatisch. Der Probekörper wird zuerst so eingespannt, daß der Eindruck an der gewünschten Stelle entsteht. Nach dem Drücken der Start-Taste führt der Apparat folgende Operationen aus: Drehen des Eindringkörper-Revolvers in die vorgewählte Stellung, Aufsetzen der Prüfkraft, Abheben der Prüfkraft, Drehen des Prüfkörper-Revolvers in die Stellung Projektion und Einschalten der Beleuchtung, so daß der Eindruck nun auf der Mattscheibe ausgemessen werden kann. Die Ausmessung selbst erfolgte bisher hauptsächlich manuell. Mit der neuen Schablone wird sie stark vereinfacht.

Die in der Fig. 3 gezeigte Schablone 12 weist vier, um 90° gegeneinander verschobene, identische Kurvenlinie $3_A$, $3_B$, $3_C$, $3_D$ aus. Zur Bestimmung der mittleren Diagonale $d_m$ der durch den Eindringkörper verursachten Eindruckfläche 11 werden die vier Radien $r_A$ bis $r_D$ gemessen. Nachdem von einem Referanzpunkt aus, im vorliegenden Fall gegeben durch die Lage des Fadenkreuzes mit Zentrum 2, welches die vier Endpunkte A, B, C und D der Eindruckfläche 11 möglichst gut deckt, die Kurvenlinie 3 mit Punkt A zur Deckung gebracht worden und die dazu notwendige Rotation am Strichraster 14 abgezählt ist, muß die Schablone 12 für die entsprechenden folgenden drei Messungen nur noch zur Aufnahme der Änderung gegenüber der vorhergehenden Messung rotiert werden.

Zweckmäßigerweise werden die Kurvenlinien direkt auf der Rückseite der runden Mattscheibe angebracht, und diese wird als Ganzes gedreht. Die Mattscheibe kann auf einer Kreuzführung gelagert sein, damit die Achse des Fadenkreuzes leicht manuell eingestellt werden kann.

Der vollautomatischen Bestimmung des Härtewertes dient z. B. ein Mikroprozessor, welcher die Strichzahlen der vier Messungen über einen Winkelmeßgeber aufnimmt, diese gegebenenfalls linearisiert, die mittlere Diagonalenlänge bestimmt und, unter Berücksichtigung der verwendeten Prüfkraft, den Härtewert berechnet.

Eine Auslegung des Strichrasters, so daß die Strichzahl proportional dem Härtewert ist, vereinfacht wohl die Rechnung, hat aber den Nachteil, daß die mittlere Diagonalenlänge, welche laut Meßnorm zu Härtewertkorrekturen benötigt wird, nicht verfügbar ist.

Bei der gewählten Kurvenform ist die Meßgenauigkeit für Diagonalenlängen relativ unempfindlich gegen Verschiebungen des Zentrums der Eindruckfläche. Dadurch ist eine translatorische Einrichtung meist nur nach dem Wechsel des Eindringkörpers notwendig. Verdrehungen der Eindringfläche hingegen haben auf die Messung keinen Einfluß.

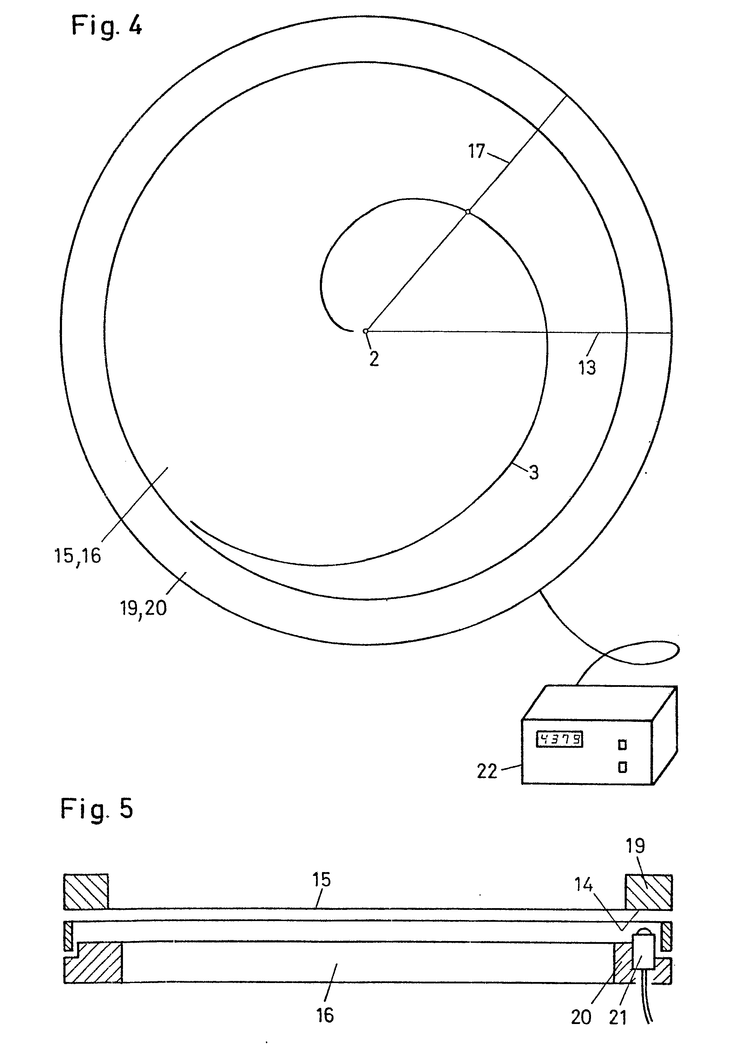

In den Fig. 4 und 5 ist schematisch ein digitales Längenmeßgerät gezeigt. Das Gerät weist zwei konzentrische Scheiben 15, 16 auf, die relativ zueinander um das Drehzentrum 2 verdrehbar sind. Die untere Scheibe 16 ist mit der Kurvenlinie 3 versehen, währenddem die obere Scheibe 15 mit einem durch das Drehzentrum 2 gegen den Meßstrahl 17 ausgerüstet ist. Zwischen den Scheiben 15, 16 ist eine Halterung 18 angeordnet.

Die Scheiben 15, 16 weisen je einen Ring 19, 20 am Außenumfang auf, damit sie besser verstellt werden können. Ferner sind die Scheiben mit je einem Strichraster 14 versehen.

Mittels eines Abtaststiftes 21 wird der Strichraster 14 auf beiden Scheiben 15, 16 abgetastet, und die Impulse werden in einen Mikroprozessor 22 mit Digitalanzeige eingegeben.

Beim Messen wird zuerst das Zentrum 2 des Gerätes mit dem Zentrum eines gewünschten Polarkoordinatennetzes zur Deckung gebracht. Sodann wird der Meßstrahl 17 mit einem Referenzzeiger 13 des Polarkoordinatennetzes zur Deckung gebracht, und der Referenzwinkelwert wird durch Tastendruck in den Rechner 22 eingegeben. Sodann wird durch Verdrehen der beiden Scheiben der Schnittpunkt des Meßstrahles 17 und der Kurvenlinie 3 auf den zu messenden Punkt gelegt. Der Abtaststift zählt die benötigte Anzahl Striche. Auf Befehl »Meßpunkt« errechnet der Rechner daraus die Polarkoordinaten. Sodann wird der zweite Meßpunkt eingegeben. Auf Befehl »Abstand messen« berechnet der Rechner den Abstand zwischen den beiden Punkten.

Dieses digitale Längenmeßgerät eignet sich z. B. für Profilprojektoren. Es ist kompakt und ideal für die Ausmessung von polarorientierten und entsprechend polarvermaßter Objekte (z. B. Zahnräder, Rundheitsmessung, Vickers-Härteprüfung). Es eignet sich auch als Aufsatz auf bestehende Profilprojektoren. Das Gerät kann auch zur Ausmessung von Zeichnungen dienen.

## Patentansprüche

1. Vorrichtung zur Messung der Länge einer Strecke, bei welcher eine relativ zu dieser Strecke (7) verdrehbare Schablone (1; 12) mit mindestens einer Kurvenlinie (3) vorgesehen ist, dadurch gekennzeichnet, daß die Kurvenlinie (3) bei entsprechender Drehung der Schablone (1; 12) um einen festen Drehpunkt (2) mit den Endpunkten (A, B) der Strecke (7) in Deckung bringbar ist, wobei der Drehwinkel ($\Delta\alpha$) zwischen den beiden Deckungspositionen ein Maß für die Länge der Strecke (7) ist.

2. Vorrichtung nach Anspruch 1, dadurch gekennzeichnet, daß der Drehpunkt (2) der Schablone (1) außerhalb der Strecke (7), jedoch auf einer mit der Strecke in Deckung bringbaren, auf der Schablone aufgebrachten Trägergeraden (4) liegt.

3. Vorrichtung nach Anspruch 1, dadurch gekennzeichnet, daß jedem radialen Abstand (r) des Drehpunktes (2) zur Kurvenlinie (3) bezüglich der Strecke (7) ein Winkel ($\alpha$) eindeutig zugeordnet ist, welcher als lineare oder nichtlineare Funktion des Abstandes (r) ausdrückbar ist.

4. Vorrichtung nach Anspruch 1, dadurch gekennzeichnet, daß die Schablone (1) als Projektionsebene ausgebildet ist, auf welche die zu messende Strecke projizierbar ist.

5. Vorrichtung nach Anspruch 1, dadurch gekennzeichnet, daß die Schablone (12) eine konzentrische Meßskala (14) aufweist, die fest oder als drehbarer Ring ausgebildet ist.

6. Vorrichtung nach Anspruch 1, dadurch gekennzeichnet, daß die Schablone mit einer digitalen Codescheibe für eine digitale Winkelmessung versehen ist, oder daß sie einen Strichraster für eine Winkelmessung nach dem Inkrementalverfahren aufweist.

7. Vorrichtung nach Anspruch 1, dadurch gekennzeichnet, daß bei mehreren zu messenden Strecken und Winkeln, welche über einen gemeinsamen Bezugspunkt erfaßbar sind, jedem Meßpunkt eine eigene Kurve auf der Schablone zugeordnet ist.

8. Vorrichtung nach Anspruch 1, dadurch gekennzeichnet, daß die Schablone (12) vier identische, um 90° gegeneinander verschobene Kurvenlinien (3$_A$ bis 3$_D$) aufweist, welche mit den Ecken (A, B, C, D) einer Eindringfläche (11) bei der Härteprüfung nach Vickers in Deckung bringbar sind.

9. Verwendung der Vorrichtung nach Anspruch 1 an Profilprojektoren, Werkstattmikroskopen, Bildschirmanlagen und bei Härteprüfern, welche auf der Ausmessung von Eindringflächen beruhen.

10. Verwendung der Vorrichtung nach Anspruch 9 zur Längen- und Winkelmessung.

11. Vorrichtung nach Anspruch 1, gekennzeichnet durch zwei konzentrische, relativ zueinander verdrehbare Scheiben (15, 16), deren eine mit einem Strahl (17) durch den Drehpunkt (2) versehen ist und auf der anderen die Kurvenlinie (3) angeordet ist.

## Claims

1. Apparatus for measuring the length of a straight line, wherein a template (1; 12) rotatable relative to this straight line (7) and having at least one curved line (3) is provided, characterised in that the curved line (3) can be made to coincide with the end points (A, B) of the straight line (7) when the template (1; 12) is correspondingly rotated about a fixed point of rotation (2), the angle of rotation ($\Delta, \alpha$) between the two positions of coincidence being a measurement of the length of the straight line (7).

2. Apparatus as claimed in claim 1, characterised in that the point of rotation (2) of the template (1) is outside the straight line (7) but on a carrier line (4) which can be made to coincide with the straight line and is provided on the template.

3. Apparatus as claimed in claim 1, characterised in that each radial spacing (r) of the point of rotation (2) from the curved line (3) with respect to the straight line (7) has an angle ($\alpha$) clearly associated with it, which can be expressed as a linear or nonlinear function of the spacing (r).

4. Apparatus as claimed in claim 1, characterised in that the template (1) is constructed as a plane of projection on which the straight line to be measured can be projected.

5. Apparatus as claimed in claim 1, characterised in that the template (12) has a concentric measuring scale (145) which is fixed or constructed as a rotatable ring.

6. Apparatus as claimed in claim 1, characterised in that the template is provided with a digital code disc for digital angle measurement or in that it comprises a line grid for measuring the angles by the incremental method.

7. Apparatus as claimed in claim 1, characterised in that in the case of a plurality of lines and angles which are to be measured and which can be determined using a common reference point, each measuring point is associated with its own curve on the template.

8. Apparatus as claimed in claim 1, characterised in that the template (12) comprises four identical curved lines (3$_A$ to 3$_D$) which are displaced through 90° relative to one another and which can be made to coincide with the corners (A, B, C, D) of a penetration surface (11) during Vickers hardness testing.

9. Use of the apparatus as claimed in claim 1 on profile projectors, workshop microscopes, picture screen equipment and in hardness testing apparatus based on the measurement of penetration areas.

10. Use of the apparatus as claimed in claim 9 for measuring lengths and angles.

11. Apparatus as claimed in claim 1, characterised by two concentric discs (15, 16) which can be rotated relative to each other, one of which is provided with a radius (17) through the centre of rotation (2) whilst on the other is provided the curved line (3).

## Revendications

1. Dispositif pour la mesure de la longueur d'un sement, dans lequel est prévu un gabarit (1; 12) avec au moins une courbe (3), pouvant tourner par rapport à ce segment (7), caractérisé en ce que la courbe (3) peut être amenée en recouvrement avec les points d'extrémité (A, B) du segment (7) grâce à une rotation adéquate du gabarit (1; 12) autour d'un fixe de rotation (2), l'angle de rotation ($\Delta\alpha$) entre les deux positions de recouvrement étant un étalon pour la longueur du segment (7).

2. Dispositif selon la revendication 1, caractérisé en ce que le point de rotation (2) du gabarit (1) se trouve en-dehors du segment (7), mais sur une droite porteuse (4) pouvant être amenée en recouvrement avec le segment et disposée sur le gabarit.

3. Dispositif selon la revendication 1, caractérisé en ce qu'à chaque distance radiale (r) du point de rotation (2) à la courbe (3) par rapport au segment (7), est associé un angle ($\alpha$) de façon univoque, qu'on peut exprimer sous forme d'une fonction linéaire ou non linéaire de la distance (r).

4. Dispositif selon la revendication 1, caractérisé en ce que le gabarit (1) est réalisé sous forme de plan de projection sur lequel on peut projeter le segment à mesurer.

5. Dispositif selon la revendication 1, caractérisé en ce que le gabarit (12) présente une échelle de mesure concentrique (14) qui est réalisée de façon fixe ou sous forme d'anneau rotatif.

6. Dispositif selon la revendication 1, caractérisé en ce que le gabarit est muni du disque de codage numérique pour une mesure numérique de l'angle, ou en ce qu'il présente une graduation pour une mesure angulaire selon le processus incrémental.

7. Dispositif selon la revendication 1, caractérisé en ce qu'une courbe particulière est affectée sur le gabarit à chaque point de mesure quand plusieurs segments et angles sont à mesurer, qui peuvent être déterminés à partir d'un point de référence commun.

8. Dispositif selon la revendication 1, caractérisé en ce que le gabarit (12) présente quatre courbes ($3_A$ à $3_D$) identiques, décalées de 90° en- trè elles, qui peuvent être amenées en recouvrement avec les cons (A, B, C et D) d'une empreinte (11) lors du contrôle de dureté selon Vickers.

9. Utilisation du dispositif selon la revendication 1 sur des projecteurs de profils, des microscopes d'usines, des installations à écrans avec des contrôleurs de dureté qui reposent sur la mesure d'empreintes de pénétration.

10. Utilisation du dispositif selon la revendication 9 pour la mesure de longueurs et d'angles.

11. Dispositif selon la revendication 1, caractérisé par deux disques (15, 16) concentriques et rotatifs l'un par rapport à l'autre, dont l'un est mini d'un rayon (17) passant par le point de rotation (2) et sur l'autre est disposée la courbe (3).

Fig.1

Fig. 2

Fig. 3

7

Fig. 4

Fig. 5